# EUROPEAN PATENT SPECIFICATION

(11) **EP 1 173 057 B1**
(45) Date of publication and mention of the grant of the patent: **08.03.2006**
(21) Application number: 00925444.2
(22) Date of filing: 13.04.2000
(51) Int. Cl.: A01K 61/00

(54) **APPARATUS FOR GROWING AND HARVESTING SHELLFISH, PARTICULARLY MUSSELS**
VORICHTUNG ZUR AUFZUCHT UND ERNTE VON MUSCHELN
SYSTEME D'ELEVAGE ET DE RAMASSAGE DE MOLLUSQUES, EN PARTICULIER DE MOULES

(30) Priority: 13.04.1999 GB 9908300
(43) Date of publication of application: 23.01.2002
(73) Proprietor: Xplora Products Limited, Uddingston, Glasgow G71 6ET (GB)
(72) Inventor: MCLACHLAN, James, Uddingston, Glasgow G71 6ET (GB)
(74) Representative: Kennedy, David Anthony
(86) International application number: PCT/GB2000/001407
(87) International publication number: WO 2000/060930

(56) References cited:
- FR-A- 2 586 895
- US-A- 3 017 857
- US-A- 5 653 193

## Description

The present invention relates to a shellfish culture track and a shellfish harvesting vessel for growing and harvesting shellfish, particularly mussels.

At the present time, mussels are usually cultured on long lines. Mussels grow on a series of pegged ropes (mussel droppers) which hang underwater from head ropes (headlines). The headlines are supported by purpose made floats and are typically 100m long. Usually, two headlines will be supported parallel to each other, one on either side of the floats.

Mussel droppers are colonised by larval mussels (spat) in the sea at an appropriate time of year. A pegged rope is used instead of a plain rope in order to increase the surface area available for mussels to colonise and to prevent mussels sliding down the rope as the weight of mussels increases.

Instead of a pegged rope, lengths of flat plastic sheet are used in some countries - this provides a larger surface area than a simple rope but lacks the pegs to prevent mussel slippage. Furthermore, when mussels are grown on a flat surface, they tend to displace each other from the surface as they grow.

Mussel spats may be on-grown on mussel droppers until they have reached a commercially useful size or may be harvested whilst small and then cultivated further by another technique.

Mussels are harvested by removing the mussel droppers from the sea onto a harvesting vessel and then stripping the droppers of mussels either by hand (a slow and labour-intensive process) or by a machine which uses brushes to displace the mussels.

In recent years, there has been substantial growth in the demand for mussels and the mussel-farming industry has struggled to keep up with demand. It is therefore highly desirable to provide techniques for increasing production volume and reducing unit costs.

There is also a market for young mussels which can then be on-grown by other techniques. Therefore, it would also be advantageous to provide a better method of producing young, small mussels.

US Patent 3,017,857 to Munz discloses a oyster spat collection means consisting of a fabric net and a bolt adapted to reel up and cut that net. The use of this net for oyster cultivation and subsequent retrieval onto a vessel is limited by the mechanical rigidity in a net. Such a net would be difficult in practice to reel up and would be limited in its ability to form a solid support for mussel growth. The weight of mussels can be very substantial and so mechanical strength is important if yield is not to be compromised.

US Patent 3,017,857 does consider the possibility of stiffening lateral members of the net with concrete or other materials which function as an aid to the growth of oysters. However, this document does not disclose the use of any mechanically rigid structure and concrete is at present solely to aid oyster growth and preferably the net disclosed therein is cemented only at the intersections of ropes thereby not achieving significant mechanical strength. Concrete is present in US 3,017,857 simply as it benefits oyster growth and so one skilled in the art would not think to use it for mussel cultivation as mussels do not require concrete or similar materials but will grow directly on plastic ropes.

It is therefore an aim of the present invention to provide a mechanically strong structure for mussel spat collection using a construction which is inherently rigid and which is cheap and easy to manufacture.

According to a first aspect of the invention there is provided a mussel culture track comprising a plurality of non-intersecting flexible linear supports and a plurality of rigid linear spacing means arranged at intervals along said flexible linear supports and joining adjacently disposed linear supports.

Preferably, the mussel culture track has exactly two non-intersecting flexible linear supports.

More preferably, the mussel culture track is ladder shaped.

The flexible linear supports may be plastic mussel ropes.

The spacing means may be plastic overmouldings.

Preferably, the spacing means extend beyond the non-intersecting flexible linear supports thereby forming teeth operable to be engaged.

Optionally, a first spacing means is connected to a second spacing means by a panel, said panel comprising a plurality of additional linear support means for growing mussels thereon, said additional linear support means being formed into a network such that the spacing of the network determines the size to which mussels grow.

According to a second aspect of the invention, there is provided a mussel harvesting vessel adapted to harvest mussels from the mussel culture track of the first aspect.

The vessel preferably comprises mussel removal means, winching means adapted to reel in and store the mussel culture track, and mussel conveyor means for guiding the mussel culture track through the mussel removal means using teeth and teeth engaging members provided on the mussel conveyor means and the mussel culture track.

Preferably, the vessel is provided with teeth adapted to engage with the spacing means of the non-intersecting flexible linear supports.

The vessel may be multi-hulled, and the conveyor means is adapted to guide the mussel culture track between hulls.

The mussel removal means may comprise a brush system.

There are now described example embodiments of the present invention with reference to the following diagrams in which:
Figure 1 shows a plan view of a mussel culture track according to the present invention;
Figure 2 shows a cross section through the mussel culture track of Figure 1;
Figure 3 shows a vertical cross-section through a long line and a mussel harvesting vessel;
Figure 4 shows a plan view of a long line and a mussel harvesting vessel; and
Figure 5 shows plan and transverse cross-sections through a mussel culture track with mesh panels according to a particular embodiment of the present invention.

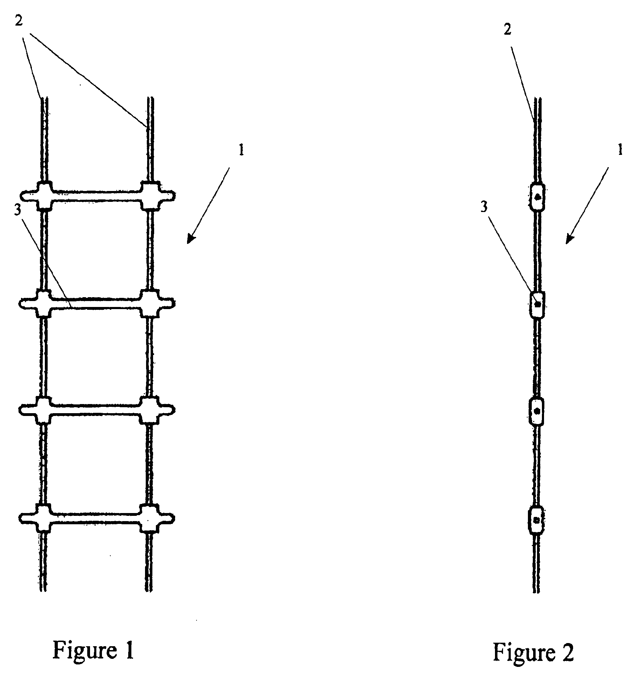

Figure 1 shows a plan view of a mussel culture track 1 according to the present invention. Two continuous mussel ropes 2, typically made from plastic, are held by rigid spacers 3, typically plastic overmouldings, at regular intervals. Figure 2 shows the same mussel culture track in cross-section.

The rigid overmoulded spacers are mechanically strong. They function to hold the two ropes apart preventing fouling and to be readily winched in by the harvesting vessel described below. It is advantageous that they are formed from an inherently strong material rather than by a multiple stage material treatment process.
Furthermore, plastic overmouldings can be manufactured cheaply on a large scale making an economically viable product.

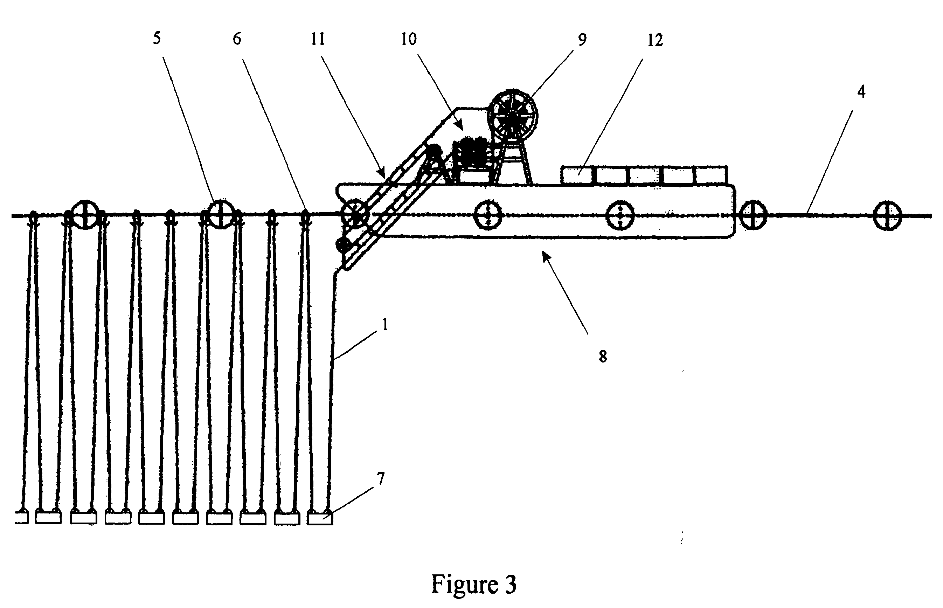

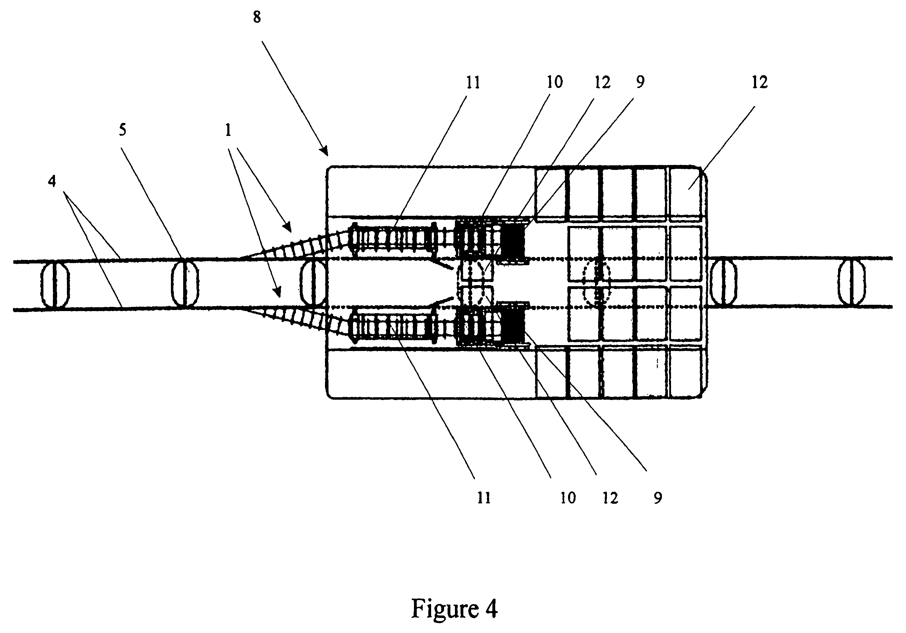

Figures 3 and 4 respectively show a cross-section through and a plan of a long line and a mussel harvesting vessel according to the present invention. Two headlines 4 are supported by floats 5. From these floats, the mussel culture tracks 1 hang, held by clips 6. The mussel culture tracks are continuous - one is attached to each of the two headlines which comprise a long line. The orientation of the mussel culture tracks in the water is maintained by weighted spacers 7.

A twin-hulled mussel harvesting vessel 8 straddles the line of floats and is provided on either side with a reel and winch system 9 which can dispense, retrieve or store the mussel culture track, a system of rotating brushes 10 which acts to strip mussels from the mussel culture track and a conveyor system 11 which guides the track into the brush system and transfer/storage bins 12 to store the harvested mussels.

By providing two mussel ropes on each mussel culture track and a rigid spacer, the invention represents a convenient way to increase the surface on which mussels can be successfully cultured.

Merely increasing the surface area by providing an extended flat surface would not be effective. This invention recognises that when mussels grow on a flat surface, they only have one outward dimension available in which to grow. They therefore displace each other from the surface as their volume increases, leading to a poor yield.

When mussels grow around a linear support, such as a rope, the mass of mussels can expand in two outward dimensions, providing more space. The present invention therefore achieves its effectiveness through providing a network of linear supports.

A further advantage of the configuration described here is that the spacers prevent mussels sliding down the track.

A still further advantage of the ladder shape of this mussel culture track is that it can be more conveniently reeled up onto the mussel harvesting barge than a simple rope or flat sheet. For example, rollers on the conveyor system may be provided with teeth which engage the spacers.

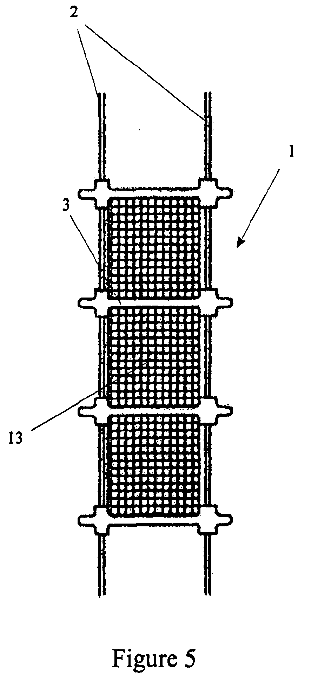

In an alternative embodiment, as shown in Figure 5, mesh panels 13 are added to the mussel culture track 1. Typically, the mesh panels and spacers will be plastic overmoulded onto the mussel ropes. This configuration will ensure that mussels grow mainly to a size determined by the pore spacing. This embodiment can therefore provide small, young mussels for on-growing further by other techniques.

Although the preferred shellfish for this invention is mussels, it is clear to one skilled in the art that the same apparatus will benefit cultivation of other types of shellfish.

Further modifications and improvements may be incorporated without departing from the scope of the invention herein intended.

## Claims

1. A mussel culture track comprising a plurality of non-intersecting flexible linear supports and a plurality of rigid linear spacing means arranged at intervals along said flexible linear supports and joining adjacently disposed linear supports.

2. The mussel culture track as claimed in Claim 1 having exactly two non-intersecting flexible linear supports.

3. The mussel culture track as claimed in Claim 2 wherein the mussel culture track is ladder shaped.

4. The mussel culture track as claimed in any preceding Claim wherein the flexible linear supports are plastic mussel ropes.

5. The mussel culture track as claimed in any preceding Claim wherein the spacing means are plastic overmouldings.

6. The mussel culture track as claimed in any preceding Claim wherein the spacing means extend beyond the non-intersecting flexible linear supports thereby forming teeth operable to be engaged,

7. The mussel culture track as claimed in any preceding Claim wherein a first spacing means is connected to a second spacing means by a panel, said panel comprising a plurality of additional linear support means for growing mussels thereon, said additional linear support means being formed into a network such that the spacing of the network determines the size to which mussels grow.

8. A mussel harvesting vessel adapted to harvest mussels from the mussel culture track of any preceding claim.

9. The vessel as claimed in Claim 8 comprising mussel removal means, winching means adapted to reel in and store a mussel culture track, and mussel conveyor means for guiding the mussel culture track through the mussel removal means using teeth and teeth engaging members provided on the mussel conveyor means and the mussel culture track.

10. The vessel as claimed in Claim 9, wherein the mussel conveyor means is provided with teeth adapted to engage with the spacing means of the non-intersecting flexible linear supports.

11. The vessel as claimed in Claim 9 or Claim 10, wherein the boat is multi-hulled, and the conveyor means is adapted to guide the mussel culture track between hulls.

12. The vessel as claimed in any of Claims 8 to 11 wherein the mussel removal means comprises a brush system.

## Patentansprüche

1. Muschelzuchtstrang, der eine Mehrzahl von einander nicht überschneidenden flexiblen linearen Trägern und eine Mehrzahl von steifen linearen Beabstandungsmitteln umfasst, die in Intervallen an den genannten flexiblen linearen Trägern entlang angeordnet sind und an angrenzend angeordnete lineare Träger angefügt sind.

2. Muschelzuchtstrang nach Anspruch 1 mit genau zwei einander nicht überschneidenden flexiblen linearen Trägern.

3. Muschelzuchtstrang nach Anspruch 2, wobei der Musselzuchtstrang leiterförmig ist.

4. Muschelzuchtstrang nach einem der vorhergehenden Ansprüche, bei dem die flexiblen linearen Träger Kunststoff-Muscheltaue sind.

5. Muschelzuchtstrang nach einem der vorhergehenden Ansprüche, bei dem die Beabstandungsmittel Zweifarben-Spritzgussteile sind.

6. Muschelzuchtstrang nach einem der vorhergehenden Ansprüche, bei dem die Beabstandungsmittel über die einander nicht überschneidenden flexiblen linearen Träger hinaus verlaufen, wodurch sie eingriffsfunktionelle Zähne bilden.

7. Muschelzuchtstrang nach einem der vorhergehenden Ansprüche, bei dem ein erstes Beabstandungsmittel durch ein Feld mit einem zweiten Beabstandungsmittel verbunden ist, wobei das genannte Feld eine Mehrzahl zusätzlicher linearer Trägermittel zum Züchten von Muscheln daran umfasst, wobei die genannten zusätzlichen linearen Trägermittel zu einem Netz geformt sind, sodass die Beabstandung des Netzes die Größe bestimmt, auf die die Muscheln heranwachsen.

8. Muschelerntefahrzeug zum Abernten von Muscheln von dem Muschelzuchtstrang eines der vorhergehenden Ansprüche.

9. Fahrzeug nach Anspruch 8, das ein Muschelentfernungsmittel, ein windenmittel zum Aufrollen und Aufbewahren eines Muschelzuchtstrangs und eines Muschelfördermittels zum Hindurchführen des Muschelzuchtstrangs durch das Muschelentfernungsmittel mithilfe von Zähnen und Zahneingriffsmitteln, die an dem Muschelfördermittel und dem Muschelzuchtstrang bereitgestellt sind, umfasst.

10. Fahrzeug nach Anspruch 9, bei dem das Muschelfördermittel mit Zähnen versehen ist, die ausgeführt sind, um mit den Beabstandungsmitteln der einander nicht überschneidenden flexiblen linearen Träger in Eingriff zu kommen.

11. Fahrzeug nach Anspruch 9 oder Anspruch 10, bei dem das Boot mehrere Rümpfe hat und das Fördermittel die Aufgabe hat, den Muschelzuchtstrang zwischen Rümpfen hindurchzuführen.

12. Fahrzeug nach einem der Ansprüche 8 bis 11, bei dem das Muschelentfernungsmittel ein Bürstensystem umfasst.

## Revendications

1. Filière pour la mytiliculture comprenant une pluralité de supports linéaires souples ne s'entrecroisant pas et une pluralité de moyens d'espacement linéaires rigides disposés à intervalles le long desdits supports linéaires souples et réunissant des supports linéaires disposés les uns à côté des autres.

2. Filière pour la mytiliculture suivant la revendication 1 comportant exactement deux supports linéaires souples ne s'entrecroisant pas.

3. Filière pour la mytiliculture suivant la revendication 2, dans laquelle la filière pour la mytiliculture a la forme d'une échelle.

4. Filière pour la mytiliculture suivant l'une quelconque des revendications précédentes, dans laquelle les supports linéaires souples sont des cordages en plastique pour moules.

5. Filière pour la mytiliculture suivant l'une quelconque des revendications précédentes, dans laquelle les moyens d'espacement sont des surmoulages en plastique.

6. Filière pour la mytiliculture suivant l'une quelconque des revendications précédentes, dans laquelle les moyens d'espacement s'étendent au-delà des supports linéaires souples ne s'entrecroisant pas, formant de ce fait des dents pouvant s'engrener.

7. Filière pour la mytiliculture suivant l'une quelconque des revendications précédentes, dans laquelle un premier moyen d'espacement est raccordé à un deuxième moyen d'espacement par un panneau, ledit panneau comprenant une pluralité de moyens de support linéaires supplémentaires sur lesquels peuvent être élevées des moules, lesdits moyens de support linéaires supplémentaires formant un réseau de sorte que l'espacement du réseau détermine la taille de croissance des moules.

8. Vaisseau de récolte des moules servant à récolter des moules sur la filière pour la mytiliculture suivant l'une quelconque des revendications précédentes.

9. Vaisseau suivant la revendication 8 comprenant un moyen d'enlèvement des moules, un moyen de treuillage pouvant ramener et ranger une filière pour la mytiliculture, et un moyen de transport de moules pour guider la filière pour la mytiliculture à travers le moyen d'enlèvement des moules en utilisant les dents et les éléments d'engrenage prévus sur le moyen de transport de moules et la filière pour la mytiliculture.

10. Vaisseau suivant la revendication 9, dans lequel le moyen de transport de moules est pourvu de dents pouvant engrener le moyen d'espacement des supports linéaires souples ne s'entrecroisant pas.

11. Vaisseau suivant la revendication 9 ou 10, dans lequel le bateau comporte plusieurs coques, et le moyen de transport peut guider la filière pour la mytiliculture entre des coques.

12. Vaisseau suivant l'une quelconque des revendications 8 à 11, dans lequel le moyen d'enlèvement des moules comprend un système de balais.
